# EUROPÄISCHE PATENTSCHRIFT

(11) **EP 2 046 619 B1**
(45) Veröffentlichungstag und Bekanntmachung des Hinweises auf die Patenterteilung: **15.09.2010**
(21) Anmeldenummer: 07730199.2
(22) Anmeldetag: 15.06.2007
(51) Int. Cl.: B60W 40/04, B60W 30/08, B60W 30/16

(54) **FAHRERASSISTENZSYSTEM**
DRIVER ASSISTANCE SYSTEM
SYSTÈME D'ASSISTANCE AU CONDUCTEUR

(30) Priorität: 24.07.2006 DE 102006034122
(43) Veröffentlichungstag der Anmeldung: 15.04.2009
(73) Patentinhaber: Robert Bosch GmbH, 70442 Stuttgart (DE)
(72) Erfinder: ZIMMERMANN, Uwe, 71686 Remseck (DE); KOEHLER, Markus, 71636 Ludwigsburg (DE)
(86) Internationale Anmeldenummer: PCT/EP2007/055966
(87) Internationale Veröffentlichungsnummer: WO 2008/012143

(56) Entgegenhaltungen:
- WO-A-2005/039957
- DE-A1- 10 324 897
- US-A1- 2005 258 997
- COUE C ET AL: "Multi-sensor data fusion using bayesian programming - an automotive application" PROCEEDINGS OF THE 2002 IEEE/RSJ INTERNATIONAL CONFERENCE ON INTELLIGENT ROBOTS AND SYSTEMS. (IROS 2002). LAUSANNE, SWITZERLAND, SEPT. 30 - OCT. 4, 2002, IEEE/RSJ INTERNATIONAL CONFERENCE ON INTELLIGENT ROBOTS AND SYSTEMS, NEW YORK, NY : IEEE, US, Bd. VOL. 1 OF 3, 30. September 2002 (2002-09-30), Seiten 141-146, XP010609242 ISBN: 0-7803-7398-7

## Beschreibung

### Stand der Technik

Die Erfindung betrifft ein Fahrerassistenzsystem nach dem Oberbegriff des Anspruchs 1.

Ein Fahrerassistenzsystem unterstützt den Fahrer bei der Führung des Fahrzeugs, zum Beispiel bei der Einhaltung der gewählten Fahrspur, bei einem beabsichtigten Spurwechsel, bei der Einhaltung des Sicherheitsabstands zu vorausfahrenden Fahrzeugen und bei der Fahrt unter schlechten Sichtbedingungen, wie beispielsweise bei Nacht oder bei schlechtem Wetter. Häufig werden in ein Fahrerassistenzsystem Assistenzfunktionen wie LDW (Lane Departure Warning), LKS (Lane Keeping Support), LCA (Lane Change Assistant) und ACC (Automatic Cruise Control) implementiert. Um das Fahrzeugumfeld zu erfassen, umfasst ein derartiges Fahrerassistenzsystem mindestens einen Bildsensor, wie beispielsweise eine Mono- oder Stereovideokamera in CCD- oder CMOS-Technik, die typischerweise mit Blickrichtung nach vom in das Fahrzeug eingebaut ist. Weitere Bildsensoren können seitwärts oder rückwärts schauend eingebaut sein. Zusätzlich kann das Fahrerassistenzsystem eine Abstandsmesseinrichtung mit Radar-, Lidar- und Ultraschallsensoren umfassen. Mit Hilfe einer derartigen Abstandsmesseinrichtung kann das Fahrassistenzsystem den Abstand zu Objekten in dem Fahrzeugumfeld erfassen. Als solche Objekte kommen andere Verkehrsteilnehmer im fließenden oder ruhenden Verkehr, Fahrbahnbegrenzungen, sowie Hindernisse und dergleichen in Betracht. Aus zeitlich aufeinander folgenden Abstandsmessungen können vorteilhaft auch Geschwindigkeitswerte abgeleitet werden. Um das Risiko bei Kolonnenfahrt und/oder Spurwechsel möglichst gering zu halten, muss die Erfassung der Messwerte mit möglichst hoher Präzision erfolgen. Bekannt sind bereits Verfahren für die Ableitung eines Gütemaßes für die Relativgeschwindigkeit eines Objekts, das mittels eines Umfelderfassungssystems erfasst wird. Dabei wird das Gütemaß zum Beispiel aus den statistischen Schwankungen der historisch gemessenen Geschwindigkeitswerte generiert. Hierfür ist ein beträchtlicher Rechenaufwand erforderlich. Zudem führt ein derartiges Verfahren zu einem in der Praxis unbrauchbaren Ergebnis, falls nur geringe Schwankungen des Messwertes oder einer davon abgeleiteten Größe auftreten. In diesem Fall würde unzutreffenderweise ein vergleichsweise hohes Gütemaß ermittelt werden.

Die gattungsbildende DE 103 24 897 A1 beschreibtein Verfahren zur Objektbestimmung in einem Fahrerassistenzsystem für Kraftfahrzeuge, bei dem durch Auswertung einer Videobildfolge und durch MAP-Schätzung einer Bayesschen Wahrscheinlichkeitsfunktion eine Ergebnisgröße bestimmt wird, die den Zustand des Objekts beschreibt, gekennzeichnet durch die folgenden Schritte: a) Durch die Bildauswertung, wahlweise in Kombination mit der Auswertung von Objektdaten aus anderen Quellen, werden mindestens zwei von einander unabhängige Messwerte für die Ergebnisgröße bestimmt, b) jedem Messwert wird ein Gütefaktor zugeordnet, der die Verlässlichkeit des Messwertes beschreibt, c) die Wahrscheinlichkeitsverteilung jedes Meßwertes wird durch eine Gauß-Verteilung modelliert, mit einer vom Gütefaktor abhängigen Streuung, und d) als Bayessche Wahrscheinlichkeitsfunktion für die MAP-Schätzung wird das Produkt der Gauß-Verteilungen gebildet.

Die WO 2005/039957 A1 schlägt ein Fahrerassistenzverfahren und eine Fahrerassistenzvorrichtung vor, welche auf der Basis von Fahrspurinfortnationen arbeitet. Die Fahrspurinformationen werden dabei je nach Witterungsbedingungen aus einem von einem Videosensor aufgenommenen Bild gemessen und/oder aufgrund von Objekten in diesem Bild geschätzt.

### Offenbarung der Erfindung

### Technische Aufgabe

Der Erfindung liegt die Aufgabe zugrunde, ein verbessertes Fahrerassistenzsystem zu schaffen, bei dem für Messwerte, insbesondere Abstandsmesswerte, bzw. für davon abgeleitete Größen, ein zuverlässigeres Gütemaß ermittelt werden kann.

### Technische Lösung

Eine Lösung dieser Aufgabe wird durch ein Fahrerassistenzsystem mit einer Abstandsmesseinrichtung gemäß Anspruch 1 erreicht, die Abstandswerte von Objekten aus dem Umfeld eines Fahrzeugs erfasst, wobei, basierend auf einem fahrzeugfesten Koordinatensystem, das Umfeld des Fahrzeugs in Bereiche unterteilt wird und Abstandswerten aus den jeweiligen Bereichen, bzw. aus diesen Abstandswerten abgeleiteten Messgrößen, individuelle Gütemaße zugeordnet werden.

### Vorteilhafte Wirkungen

Durch die feste Zuordnung eines Gütemaßes zu aus einem bestimmten Bereich stammenden Messwert wird vermieden, dass sich, wie bei Zuordnung eines Gütemaßes nach statistischen Methoden, ein für die Praxis unbrauchbares Gütemaß ergibt, wenn sich der Messwert oder eine daraus abgeleitete Größe vergleichsweise wenig ändert. Bei einem Fahrerassistenzsystem, bei dem die Abstandsmesseinrichtung eine Mehrzahl von Messstrahlen erzeugt, wobei die Bereiche von einem oder mehreren Messstrahlen abgedeckt werden, können alternativ und/oder zusätzlich den aus den jeweiligen Messstrahlen stammenden Abstandswerten bzw. aus diesen Abstandswerten abgeleiteten Messgrößen, individuelle Gütemaße zugeordnet werden. Besonders zweckmäßig wird dabei die Größe des den Abstandswerten zugeordneten Gütemaßes von der Variationsbreite einer von den Abstandswerten abgeleiteten Messgröße abhängt gemacht.

Erfindungsgemäß ist die Größe des den Abstandswerten zugeordneten Gütemaßes von einer Änderung einer Komponente der Relativgeschwindigkeit zwischen einem Objekt aus dem Umfeld des Fahrzeugs und dem Fahrzeug abhängig, wobei der Messgröße bei geringer Variationsbreite ein niedriges Gütemaß und bei großer Variationsbreite ein hohes Gütemaß zugeordnet wird. Besonders vorteilhaft können diskrete Gütemaße durch rekursive Filterung zusätzlich auch noch quasikontinuierlich abgestuft werden. Weitere Vorteile ergeben sich aus den Unteransprüchen und der Beschreibung.

### Kurze Beschreibung der Zeichnungen

Ausführungsformen der Erfindung werden nachfolgend unter Bezug auf die Zeichnung näher erläutert. Dabei zeigt
Figur 1 eine Aufsicht auf eine Fahrbahn mit mehreren Fahrspuren und ein Fahrzeug mit einer mehrstrahligen Abstandsmesseinrichtung;
Figur 2 die schematische Darstellung einer Abstandsmesseinrichtung eines Fahrerassistenzsystems mit lediglich einem Messstrahl;
Figur 3 die schematische Darstellung einer Abstandsmesseinrichtung eines Fahrerassistenzsystems mit mehreren Messstrahlen;
Figur 4 in einem Diagramm die Zuordnung eines Gütemaßes zu bestimmten Bereichen aus dem Umfeld eines Fahrzeugs.

### Ausführungsformen der Erfindung

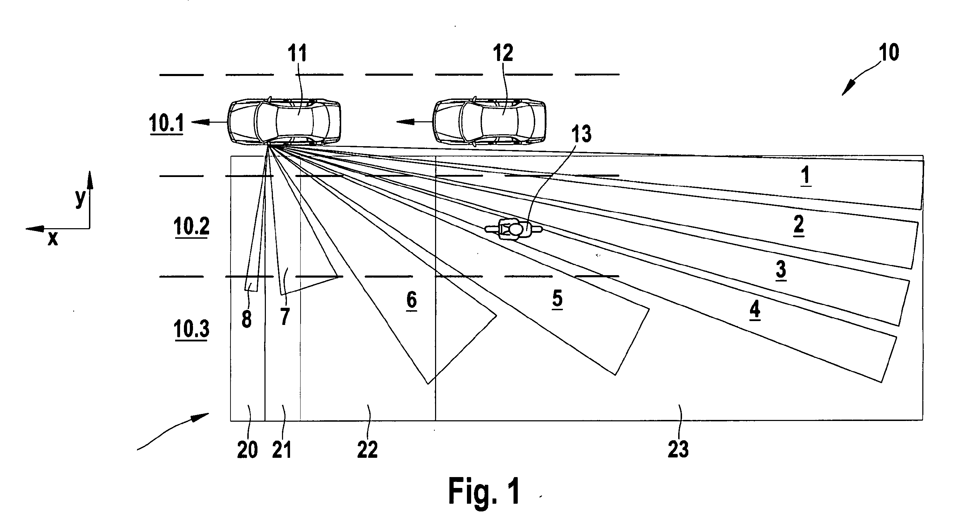

Figur 1 zeigt eine Aufsicht auf eine Fahrbahn 10, die mehrere Fahrspuren 10.1, 10.2, 10.3 umfasst. Auf der Fahrspur 10.1 fahren zwei Fahrzeuge 11, 12 hintereinander in x-Richtung. Das Fahrzeug 11 (Egofahrzeug) ist mit einem eine Abstandsmesseinrichtung umfassenden Fahrerassistenzsystem ausgerüstet. Eine bordgestützte Abstandsmesseinrichtung kann mit Radar-, Lidar- oder Ultraschallsensoren oder mit Kombinationen derartiger Sensoren ausgestattet sein. Bei der hier beispielhaft dargestellten Abstandsmesseinrichtung handelt es sich vorzugsweise um ein mehrstrahliges Lidar-System. Unter einem mehrstrahligen Lidar-System ist eine Abstandsmesseinrichtung zu verstehen, bei der, vorzugsweise zeitlich gestaffelt, oder aber auch zeitgleich, eine Mehrzahl von Messstrahlen generiert werden, die jeweils einen bestimmten Raumwinkelbereich aus dem Umfeld des Fahrzeugs erfassen. Falls sich ein Objekt in dem jeweiligen Winkelbereich aufhält, wird Strahlung zu dem Fahrzeug 11 reflektiert. Die an dem Objekt reflektierte Strahlung kann dort erfasst und ausgewertet werden. Auf diese Weise kann die Winkellage (Azimut) des von einem Messstrahl getroffenen Objekts erfasst werden. Weiterhin kann der Abstand des Objekts aus der Laufzeit des von dem Lidar-System des 11 ausgesandten und an dem Objekt reflektierten Strahls ermittelt werden. In dem in Figur 1 dargestellten Ausführungsbeispiel umfasst das Lidar-System des Fahrzeugs 11 insgesamt acht Messstrahlen, die mit den Bezugsziffern 1 bis 8 bezeichnet sind. Die Messstrahlen 1 bis 8 erstrecken sich seitlich von dem Egofahrzeug 11 und decken einen Bereich der links von der eigenen Fahrspur 10.1 verlaufenden Fahrspur 10.2 ab. Selbstverständlich kann das Lidar-System des Fahrzeugs 11 auch weitere Messstrahlen umfassen, die das vor dem, hinter dem oder seitlich rechts von dem Fahrzeug 11 liegende Fahrzeuguinfeld abdecken. Die in Figur 1 dargestellten Messstrahlen 1 bis 8 ermöglichen eine gute Überwachung der Überholspur 10.2 im Rahmen einer LCA-Funktion (LCA = Lane Change Assistant) des Fahrerassistenzsystems des Fahrzeugs 11. Auf diese Weise können sich dem Fahrzeug 11 von hinten oder seitlich nähernde Objekte, wie insbesondere andere Verkehrsteilnehmer, sicher erfasst und Spurwechselaktivitäten des Fahrzeugs 11 risikoärmer gestaltet werden. Dies gilt insbesondere dann, wenn das sich nähernde Objekt sich gerade in dem toten Winkel der Rückspiegel des Fahrzeugs 11 befindet. In Figur 1 ist mit Bezugsziffer 13 ein Motorrad bezeichnet, das sich dem Fahrzeug 11 auf der Fahrspur 10.2 von hinten nähert. Mit Hilfe der Messstrahlen des Lidar-System kann die LCA-Funktion des Fahrerassistenzsystems bestimmen, ob ein Spurwechsel des Fahrzeugs 11 gefahrlos möglich ist oder nicht. Im Fall eines Risikos kann der Fahrer des Fahrzeugs 11 zweckmäßig durch optische, akustische und oder haptische Signale auf dieses Risiko aufmerksam gemacht werden. Notfalls können bordeigene Systeme durch Eingriff in Lenk-, Bremssystem und/oder Antriebsstrang des Fahrzeugs 11 die Einleitung eines Spurwechsels so lange verhindern, bis das Motorrad 13 das Fahrzeug 11 überholt hat und die Überholspur 10.2 wieder frei ist. Das von den Messstrahlen 1 bis 8 des Lidar-Systems des Fahrzeugs 11 erfassbare Fahrzeugumfeld ist in unterschiedliche Bereiche 20, 21, 22, 23 unterteilt. In einem sich mit dem Fahrzeug 11 fort bewegenden Koordinatensystem liegen die Bereiche 20 und 21 querab zur linken Seite des Fahrzeugs 11. Die Bereiche 22 und 23 schließen sich nach hinten links seitlich und rückwärts an. Der Bereich 20 wird im Wesentlichen von dem Messstrahl 8 abgedeckt. Der Bereich 21 wird von den Messstrahlen 6 und 7 abgedeckt. Der Bereich 22 wird von den Messstrahlen 1 bis 7 abgedeckt. Der Bereich 23 schließlich wird von den Messstrahlen 1 bis 6 abgedeckt.

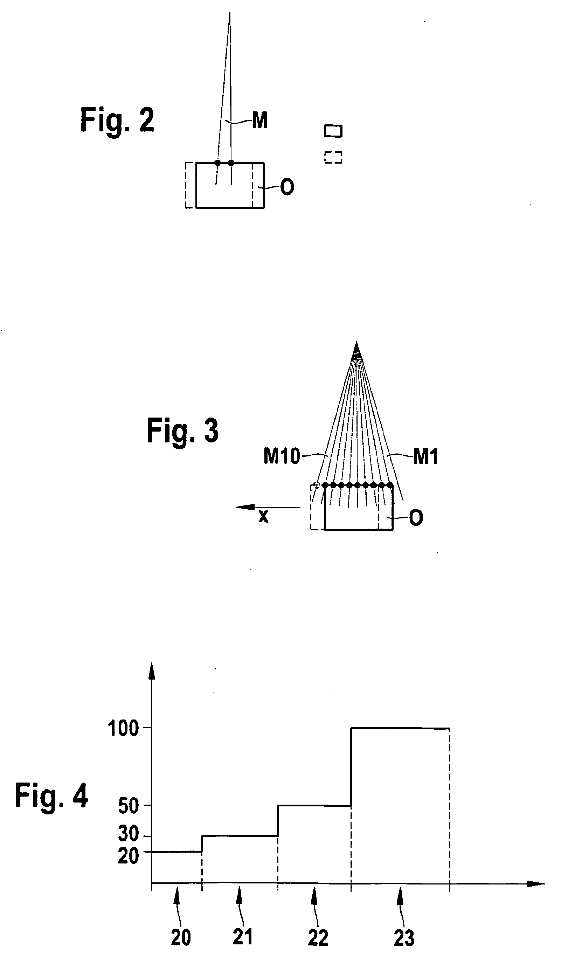

Wenn ein sich dem Fahrzeug 11 näherndes Objekt, wie beispielsweise das Motorrad 13, in dem Bereich 23 befindet, wird dieses Objekt von den Messstrahlen 1 bis 4 im wesentlichen in radialer Richtung getroffen. Dies bedeutet, dass in diesem Bereich 23 die Komponente Vᵣₓ der Relativgeschwindigkeit Vᵣ zwischen dem sich nähernden Objekt und dem Fahrzeug 11 aus der zeitlichen Ableitung des Abstands mit einem hohen Gütemaß ermittelt werden kann. Je geringer die Bewegungskomponente herannahender Objekte in radialer Strahlrichtung ist, desto schlechter kann die Geschwindigkeit dieses Objekts in x-Richtung bestimmt werden. Dies ist zum Beispiel in den querab zu dem Fahrzeug 11 liegenden Bereichen 20 und 21 der Fall, die von den Messstrahlen 8 bzw. 6 und 7 abgedeckt werden. In diesen Bereichen 20, 21 werden das Fahrzeug 11 überholende Objekte von den Messstrahlen 6 und 7 bzw. 8 im Wesentlichen nur seitlich getroffen. Eine Geschwindigkeitskomponente V_{ry} der Relativgeschwindigkeit in y-Richtung könnte dagegen mit einem hohen Gütemaß bestimmt werden. Anhand von Figur 2a und Figur 2b wird im Folgenden verdeutlicht, wie sich die Struktur der Messstrahlen auf die Erfassungsmöglichkeit der interessierenden Geschwindigkeitskomponente auswirkt. Figur 2b zeigt eine Abstandsmesseinrichtung mit nur einem einzigen Messstrahl M. Weiterhin dargestellt sind die Konturen eines von dem Messstrahl M getroffenen Objekts O zu den Zeitpunkten t und t+Δt. In dem skizzierten Fall ist die von dem Abstandsmesseinrichtung erfasste Geschwindigkeitskomponente Vᵣₓ gleich Null, da alle vorhandenen Messstrahlen der Abstandsmesseinrichtung, in diesem Fall also nur der Messstrahl M, das Objekt O zu den Zeitpunkten t und t+Δt treffen. In diesem Fall ist die erfassbare Relativgeschwindigkeit auch weitgehend unabhängig von der Geschwindigkeit des von dem Messstrahl M erfassten Objekts O. Eine vorteilhaftere Abstandsmesseinrichtung mit einer Vielzahl von Messstrahlen M1 bis M10 ist in Figur 2a dargestellt. Angedeutet sind auch wiederum die Konturen eines von den Messstrahlen erfassten Objekts zu den Zeiten t und t+Δt. Infolge der großen Anzahl von Messstrahlen hat diese Abstandsmesseinrichtung eine höhere Winkelauflösung. Da das Objekt O zu unterschiedlichen Zeiten von unterschiedlichen Messstrahlen getroffen wird, ist auch die Bestimmung einer Komponente Vᵣₓ der Geschwindigkeit leichter möglich. Ein Auswerteverfahren, das, in herkömmlicher Weise, versucht, das Gütemaß von Messwerten aus der statistischen Schwankung der Komponente Vᵣₓ der Geschwindigkeit zu ermitteln, würde, im vorliegenden Beispielsfall, bei den aus den Bereichen 20 und 21 gewonnenen Messwerten, zu einem völlig falschen Ergebnis führen. Da nämlich nur sehr geringe Schwankungen der Geschwindigkeitskomponente Vᵣₓ auftreten, würde, unzutreffenderweise, ein vergleichsweise hohes Gütemaß der Messwerte festgestellt werden. Dieses Problem wird erfindungsgemäß dadurch gelöst, dass den Messwerten ein von dem jeweiligen Bereich 20, 21, 22, 23, beziehungsweise von dem jeweiligen Messstrahl l, 2,3,4,5,6,7,8 abhängiges Gütemaß zugeordnet wird. So kann beispielsweise den Messwerten aus den Bereichen 22 und 23, bei denen eine relativ große Schwankung der Geschwindigkeitskomponente Vᵣₓ auftritt, ein relativ hohes Gütemaß zugeordnet werden. Falls ein Bereich von mehreren Messstrahlen abgedeckt wird, wie beispielsweise der Bereich 23 von den Messstrahlen 1 bis 6, kann vorteilhaft Messwerten aus jedem dieser Messstrahlen ein individuelles Gütemaß zugeordnet werden, das von der zu erwartenden Schwankung der Geschwindigkeitskomponente Vᵣₓ abhängig ist. Figur 4 zeigt noch, in einem schematischen Diagramm, die Zuordnung eines Gütemaßes zu einem bestimmten Bereich aus dem Umfeld eines Fahrzeugs. So wird Messwerten aus dem Bereich 23 mit 100% ein höchstes Gütemaß zugeordnet, während Messwerten aus dem Bereich 20 ein vergleichsweise niedriges Gütemaß zugeordnet wird.

Alternativ oder zusätzlich zu der Anwendung in der Funktion LCA des Fahrerassistenzsystems kann die einem jeweiligen Messstrahl zugeordnete Bestimmung eines Gütemaßes vorteilhaft auch bei anderen Funktionen eines Fahrerassistenzsystems eingesetzt werden. Beispielsweise in für die Längsführung vorgesehenen Funktionen, wie ACC (ACC = Automatic Cruise Control) oder ACC-FSR (ACC-FSR = Automatic Cruise Control Full Speed Range). Weiterhin auch in Notbremsfunktionen oder Insassenschutzsystemen mit Precrasherkennung.

## Patentansprüche

1. Fahrerassistenzsystem mit einer Abstandsmesseinrichtung, die Abstandswerte von Objekten (0, 13) aus dem Umfeld eines Fahrzeugs (11) erfasst, **dadurch gekennzeichnet, dass** basierend auf einem fahrzeugfesten Koordinatensystem, das Umfeld des Fahrzeugs (11) in Bereiche (20, 21, 22, 23) unterteilt wird, und dass Abstandswerten aus dem jeweiligen Bereich, bzw. aus diesen Abstandswerten abgeleiteten Messgrößen, individuelle Gütemaße zugeordnet werden, wobei der Messgröße (Vᵣₓ) als Komponente der Relativgeschwindigkeit zwischen Objekt und Fahrzeug (11) in Fahrtrichtung des Fahrzeugs (11) bei geringer Variationsbreite ein niedriges Gütemaß zugeordnet wird, oder wobei der Messgröße (Vᵣₓ) als Komponente der Relativgeschwindigkeit zwischen Objekt und Fahrzeug (11) in Fahrtrichtung des Fahrzeugs (11) bei großer Variationsbreite ein hohes Gütemaß zugeordnet wird.

2. Fahrerassistenzsystem nach Anspruch 1, **dadurch gekennzeichnet, dass** die Abstandsmesseinrichtung eine Mehrzahl von Messstrahlen (1, 2, 3, 4, 5, 6, 7, 8, M, M1, M2, M3, M4, M5, M6, M7, M8, M9, M10) erzeugt, wobei die Bereiche (20, 21, 22, 23) von einem oder mehreren Messstrahlen (1, 2 3, 4, 5, 6, 7, 8, M, M1, M2, M3, M4, M5, M6, M7, M8, M9, M10) abgedeckt werden, und dass aus den jeweiligen Messstrahlen (1, 2, 3, 4, 5, 6, 7, 8, M, M1, M2, M3, M4, M5, M6, M7, M8, M9, M10) stammenden Abstandswerten bzw. aus diesen Abstandswerten abgeleiteten Messgrößen, individuelle Gütemaße zugeordnet werden.

3. Fahrerassistenzsystem nach einem der vorhergehenden Ansprüche, **dadurch gekennzeichnet, dass** die Höhe des den Abstandswerten zugeordneten Gütemaßes von der Variationsbreite einer von den Abstandswerten abgeleiteten Messgröße abhängt.

4. Fahrerassistenzsystem nach einem der vorhergehenden Ansprüche, **dadurch gekennzeichnet, dass** die Höhe des den Abstandswerten zugeordneten Gütemaßes von einer Änderung einer Komponente (Vᵣₓ) der Relativgeschwindigkeit zwischen einem Objekt (0,13) aus dem Umfeld des Fahrzeugs (11) und dem Fahrzeug (11) abhängt.

5. Fahrerassistenzsystem nach einem der vorhergehenden Ansprüche, **dadurch gekennzeichnet, dass** die den aus den jeweiligen Bereichen bzw. Messstrahlen stammenden Messwerten zugeordneten Gütemaße durch rekursive Filterung quasikontinuierlich abgestuft werden.

6. Fahrerassistenzsystem nach einem der vorhergehenden Ansprüche, **gekennzeichnet durch** die Verwendung einer mehrstrahligen Abstandsmesseinrichtung in Verbindung mit einer Spurwechselassistenzfunktion (LCA-Funktion).

## Claims

1. Driver assistance system having a distance-measuring device which detects distance values of objects (O, 13) from the surroundings of a vehicle (11), **characterized in that** the surroundings of the vehicle (11) are divided into areas (20, 21, 22, 23) on the basis of coordinate system which is fixed to the vehicle, and **in that** individual quality measures are assigned to distance values from the respective area or to measurement variables derived from these distance values, wherein a low quality measure is assigned to the measurement variable (Vᵣₓ) as a component of the relative speed between the object and vehicle (11) in the direction of travel of the vehicle (11) when there is a small variation range, or wherein a high quality measure is assigned to the measurement variable (Vᵣₓ) as a component of the relative speed between the object and vehicle (11) in the direction of travel of the vehicle (11) when there is a large variation range.

2. Driver assistance system according to Claim 1, **characterized in that** the distance-measuring device generates a plurality of measurement beams (1, 2, 3, 4, 5, 6, 7, 8, M, M1, M2, M3, M4, M5, M6, M7, M8, M9, M10), wherein the areas (20, 21, 22, 23) are covered by one or more measurement beams (1, 2, 3, 4, 5, 6, 7, 8, M, M1, M2, M3, M4, M5, M6, M7, M8, M9, M10), and **in that** individual quality measures are assigned to distance values which originate from the respective measurement beams (1, 2, 3, 4, 5, 6, 7, 8, M, M1, M2, M3, M4, M5, M6, M7, M8, M9, M10) or to measurement variables which are derived from these distance values.

3. Driver assistance system according to one of the preceding claims, **characterized in that** the magnitude of the quality measure which is assigned to the distance values depends on the variation range of a measurement variable which is derived from the distance values.

4. Driver assistance system according to one of the preceding claims, **characterized in that** the magnitude of the quality measure which is assigned to the distance values depends on a change in a component (Vᵣₓ) of the relative speed between an object (O, 13) from the surroundings of the vehicle (11) and the vehicle (11).

5. Driver assistance system according to one of the preceding claims, **characterized in that** the quality measures which are assigned to the measured values which originate from the respective areas or measurement beams are graduated quasi-continuously by recursive filtering.

6. Driver assistance system according to one of the preceding claims, **characterized by** the use of a multibeam distance-measuring device in conjunction with a lane-changing assistance function (LCA function).

## Revendications

1. Système d'assistance au conducteur avec un dispositif de mesure de la distance qui détecte les valeurs de la distance d'objet (O, 13) dans l'environnement d'un véhicule (11), **caractérisé en ce que** l'environnement du véhicule (11) est divisé en zones (20, 21, 22, 23) en se basant sur un système de coordonnées du véhicule et que des indices de qualité sont attribués aux valeurs de la distance de la zone correspondante ou à des grandeurs de mesure dérivées de ces valeurs de la distance, un indice de qualité faible étant attribué à la grandeur de mesure (V_{α}) en tant que composante de la vitesse relative entre l'objet et le véhicule (11) dans le sens du déplacement du véhicule (11) en présence d'une faible amplitude de variation et un indice de qualité élevé étant attribué à la grandeur de mesure (V_{α}) en tant que composante de la vitesse relative entre l'objet et le véhicule (11) dans le sens du déplacement du véhicule (11) en présence d'une amplitude de variation élevée.

2. Système d'assistance au conducteur selon la revendication 1, **caractérisé en ce que** le dispositif de mesure de la distance génère une pluralité de rayons de mesure (1, 2, 3, 4, 5, 6, 7, 8, M, M1, M2, M3, M4, M5, M6, M7, M8, M9, M10), les zones (20, 21, 22, 23) étant couvertes par un ou plusieurs rayons de mesure (1, 2, 3, 4, 5, 6, 7, 8, M, M1, M2, M3, M4, M5, M6, M7, M8, M9, M10) et que des indices de qualité individuels sont attribués aux valeurs de la distance issues des rayons de mesure (1, 2, 3, 4, 5, 6, 7, 8, M, M1, M2, M3, M4, M5, M6, M7, M8, M9, M10) respectifs ou aux grandeurs de mesure dérivées de ces valeurs de la distance.

3. Système d'assistance au conducteur selon l'une des revendications précédentes, **caractérisé en ce que** le niveau de l'indice de qualité attribué aux valeurs de la distance dépend de l'amplitude de variation d'une grandeur de mesure dérivée des valeurs de la distance.

4. Système d'assistance au conducteur selon l'une des revendications précédentes, **caractérisé en ce que** le niveau de l'indice de qualité attribué aux valeurs de la distance dépend d'une modification d'une composante (V_{α}) de la vitesse relative entre un objet (O, 13) de l'environnement du véhicule (11) et le véhicule (11).

5. Système d'assistance au conducteur selon l'une des revendications précédentes, **caractérisé en ce que** les indices de qualité attribués aux valeurs de mesure issues des différentes zones ou rayons de mesure sont classifiés de manière quasi-continue par filtrage récursif.

6. Système d'assistance au conducteur selon l'une des revendications précédentes, **caractérisé par** l'utilisation d'un dispositif de mesure de la distance à plusieurs rayons en combinaison avec une fonction d'assistance au changement de voie (fonction LCA).
